(19) Europäisches Patentamt
European Patent Office
Office européen des brevets

(11) **EP 0 941 601 B1**

(12) **EUROPÄISCHE PATENTSCHRIFT**

(45) Veröffentlichungstag und Bekanntmachung des Hinweises auf die Patenterteilung:
**06.02.2002 Patentblatt 2002/06**

(21) Anmeldenummer: **97951783.6**

(22) Anmeldetag: **19.11.1997**

(51) Int Cl.$^7$: **H04N 1/407**, H04N 1/40

(86) Internationale Anmeldenummer:
**PCT/DE97/02711**

(87) Internationale Veröffentlichungsnummer:
**WO 98/25400 (11.06.1998 Gazette 1998/23)**

(54) **VERFAHREN ZUM ABGLEICH EINES ABTASTGERÄTES**

PROCESS FOR CALIBRATING A SCANNER

PROCEDE D'ETALONNAGE D'UN SCANNER

(84) Benannte Vertragsstaaten:
**DE FR GB IT NL**

(30) Priorität: **02.12.1996 DE 19649797**

(43) Veröffentlichungstag der Anmeldung:
**15.09.1999 Patentblatt 1999/37**

(73) Patentinhaber: **Heidelberger Druckmaschinen Aktiengesellschaft
69115 Heidelberg (DE)**

(72) Erfinder:
• **SUHR, Holger
D-24149 Kiel (DE)**
• **HEUER, Axel
D-24253 Fahren (DE)**

(56) Entgegenhaltungen:
EP-A- 0 281 659      GB-A- 2 148 658
US-A- 4 158 859      US-A- 5 414 535

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf das Gebiet der elektronischen Reproduktionstechnik und betrifft ein Verfahren zum Abgleich eines optoelektronischen Abtastorgans eines Abtastgerätes zur punkt- und zeilenweisen Abtastung von Bildvorlagen.

Das Abtastgerät, auch Scanner genannt, kann ein Schwarz/Weiß-Scanner zur Abtastung von schwarzweißen Bildvorlagen oder ein Farbscanner zur Abtastung von farbigen Bildvorlagen sein.

Bei einem Schwarz/Weiß-Scanner wird eine schwarzweiße Bildvorlage von einer Lichtquelle bildpunktweise beleuchtet und das durch die Helligkeiten der abgetasteten Bildpunkte modulierte Abtastlicht mittels eines optoelektronische Wand- lers in ein Bildsignal umgesetzt, welches die Helligkeitswerte der abgetasteten Bildvorlage zwischen "Schwarz" und "Weiß" repräsentiert.

Bei einem Farbscanner wird das von der Bildvorlage kommende Abtastlicht zunächst mittels dichroitischer Filter in rote, grüne und blaue Lichtanteile zerlegt und den drei Farbkanälen des Farbscanners zugeführt. Die farbigen Lichtanteile werden dann mittels optoelektronischer Wandler in drei Farbsignale umgewandelt, welche die Farbanteile "Rot", "Grün" und "Blau" der in der Farbvorlage abgetasteten Bildpunkte repräsentieren.

Die Bildsignale bzw. Farbsignale werden in Signalaufbereitungs-Stufen weiterverarbeitet. Die Signalaufbereitungs-Stufen haben einen definierten Signal-Eingangsbereich, von dem ein Eckwert mit Weißpegel bezeichnet wird.

Durch einen Abgleich eines Schwarz/Weiß-Scanners oder Farbscanners vor Abtastbeginn wird der Dichteumfang einer abzutastenden Bildvorlage an den definierten Signal-Eingangsbereich der Signalaufbereitungs-Stufen angepaßt, indem das von der hellsten Stelle der Bildvorlage, dem Weißpunkt, kommende Abtastlicht in einen Bildsignalwert bzw. in einen Farbsignalwert pro Farbkanal umgesetzt wird, der dem Weißpegel entspricht.

In der DE-A-25 45 961 wird bereits ein Verfahren zum automatischen Abgleich von Scannern angegeben. in einer Abgleichphase wird das Farb-Abtastorgan eines Schwarz/Weiß-Scanners auf dem jeweiligen Weißpunkt der Bildvorlage positioniert und das vom angefahrenen Weißpunkt kömmende Abtastlicht in dem optoelektronischen Wandler in einen Bildsignal-Istwert umgesetzt. Der Bildsignal-Istwert wird in einer Regelungseinrichtung mit einem Bildsignal Sollwert verglichen, der dem Weißpegel entspricht. Ein Steuersignal ändert die Verstärkung des optoelektronischen Wandlers und/oder eines nachgeschalteten Verstärkers solange, bis die Regelabweichung Null ist. Der dazu notwendige Steuersignalwert wird für die Dauer der sich an die Abgleichphase anschließende Vorlagenabtastung gespeichert. Zum Weißabgleich bei Farbscannern ist die Regeleinrichtung auf die drei Farbkanäle erweitert.

Das bekannte Verfahren hat den Nachteil, daß beim Abgleich immer ein entsprechender Weißpunkt auf der zu reproduzierenden Bildvorlage mit dem Farb-Abtastorgan angefahren werden muß, was zeitraubend und, insbesondere bei Wiederholungen des Weißabgleichs, ungenau ist. Hinzu kommt, daß in einer farbigen Bildvorlage oft keine als Weißpunkt geeignete helle Bildstelle vorhanden ist.

In der EP-A-0 281 659 wird ein weiteres Verfahren zum Abgleich von Scannern angegeben, bei dem das wiederholte Anfahren eines Weißpunktes mit dem Farb-Abtastorgan auf einer zu reproduzierenden Bildvorlage vermieden wird. Dazu wird beim erstmaligen Weißabgleich ein Lichtabschwächungsfaktor durch optoelektronische Abtastung des Weißpunktes ermittelt. Bei Wiederholungen des Weißabgleichs wird ohne erneute Abtastung des Weißpunktes in der Bildvorlage das von dem Weißpunkt kommende Abtastlicht durch das entsprechend dem ermittelten Lichtabschwächungsfaktor abgeschwächte Licht der Lichtquelle simuliert, wobei die Lichtabschwächung mittels einer gesteuerten Irisblende vorgenommen wird.

Das bekannte Verfahren ist aufwendig und basiert auf einer farbneutralen Dichtesimulation, was in der Praxis nicht immer gegeben ist und daher gelegentlich zu unbefriedigenden Ergebnissen führen kann. Desweiteren ist bei dem bekannten Verfahren keine Dichtesimulation bei Abtastung von Aufsichtsvorlagen möglich, da die Irisblende zur richtigen Einstellung der Tiefenschärfe benötigt wird.

Aufgabe der vorliegenden Erfindung ist es daher, ein Verfahren zum Abgleich eines optoelektronischen Abtastorgans eines Abtastgerätes zur punkt- und zeilenweisen Abtastung von Bildvorlagen derart zu verbessern, daß ein einfacher und in kurzer Zeit durchführbarer Abgleich ermöglicht wird.

Diese Aufgabe wird durch die Merkmale des Anspruchs 1 gelöst. Vorteilhafte Ausgestaltungen und Weiterbildungen sind in den Unteransprüchen angegeben.

Das erfindungsgemäße Abgleichverfahren besteht aus gerätespezifischen und aus vorlagenspezifischen Schritten.

Bei den gerätespezifischen Schritten werden zunächst die Kennlinie der Licht/ Spannungs-Wandlereinrichtung aufgenommen und die Dichten der Abtastblenden und Graufilter bestimmt und in Form von Wertetabellen gespeichert. Anschließend erfolgt ein gerätespezifischer, automatischer Abgleich. Die gerätespezifischen Schritte sind in vorteilhafter Weise nur in großen Zeitabständen oder bei einem Austausch von Bauteilen in den Abtastgeräten durchzuführen.

Bei den vorlagenspezifischen Schritten wird lediglich aus den zuvor gespeicherten Wertetabellen und der jeweiligen Weißpunkt-Dichte der abzutastenden Bildvorlage die erforderliche Verstärkung der Licht/ Spannungs-Wandlereinrichtung automatisch ermittelt und an der Licht/Spannungs-Wandlereinrichtung eingestellt.

Durch das erfindungsgemäße Abgleichverfahren wird die Vorbereitungszeit für die Vorlagenabtastung wesentlich verkürzt und der Operator von routinemäßigen Abgleicharbeiten entlastet.

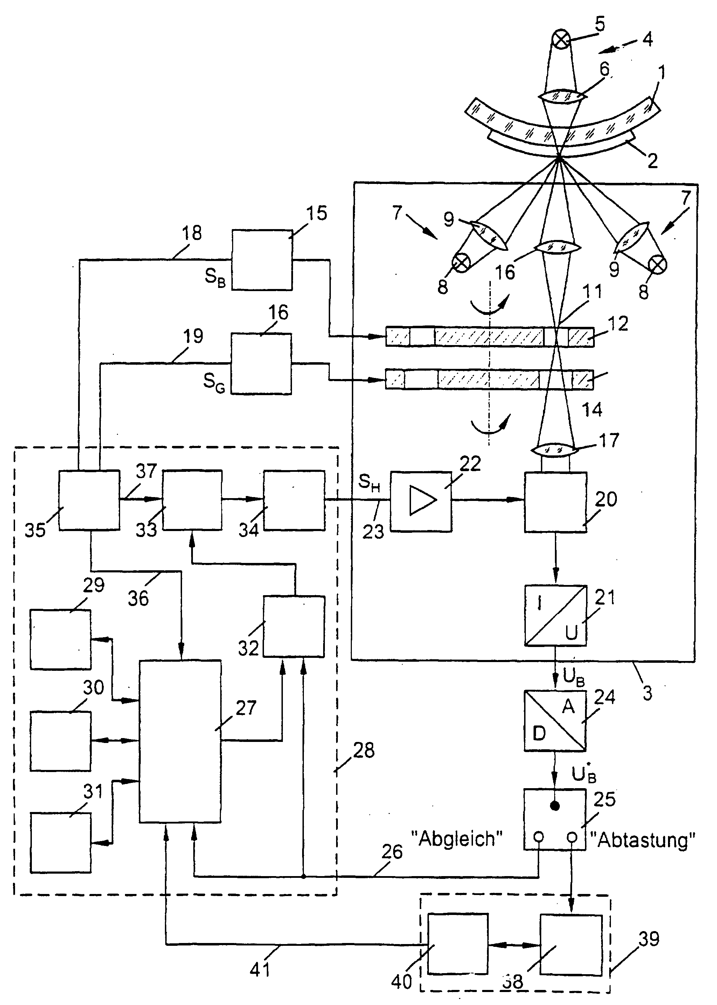

Die Erfindung wird nachfolgend am Beispiel eines Schwarz/Weiß-Scanners anhand der Figur näher erläutert.

Die Figur zeigt ein prinzipielles Blockschaltbild eines Schwarz/Weiß-Scanners mit einer Abgleicheinrichtung. Auf einer ausschnittsweise dargestellten aus Klarglas bestehenden Abtasttrommel (1) ist eine Bildvorlage (2) in Form einer Aufsichts- oder Durchsichts-Bildvorlage montiert, die von einem optoelektronischen Abtastorgan (3) punkt- und zeilenweise abgetastet wird.

Zur punktweisen Beleuchtung der Durchsichts-Bildvorlage (2) ist im Innenraum der Abtasttrommel (2) eine Durchsichts-Beleuchtungseinrichtung (4) mit einer Lichtquelle (5) und einer Linse (6) angeordnet. Zur punktweisen Beleuchtung der Aufsichts-Bildvorlage (2) befindet sich im optoelektronischen Abtastorgan (3) eine Aufsichts-Beleuchtungseinrichtung (7) mit beispielsweise zwei Lichtquellen (8) und zwei Linsen (9).

Das durch die Durchsichts-Bildvorlage (2) durchgelassene oder das von der Aufsichts-Bildvorlage (2) reflektierte Abtastlicht, das entsprechend den Helligkeiten der in der Bildvorlage (2) abgetasteten Bildpunkte moduliert ist, gelangt in das Abtastorgan (3). Das Abtastlicht wird dort mittels eines Abtastobjektivs (10) auf eine der Abtastblenden (11) eines drehbaren Blendenrades (12) fokussiert. Das Blendenrad (12) weist eine Vielzahl von Abtastblenden (11) mit unterschiedlichen Durchmessern auf. Ein Maß für die mit einer Abtastblende (11) erreichte Lichtabschwächung ist die Blendendichte $D_B$.

Dem Blendenrad (12) ist ein drehbares Filterrad (13) mit einer Anzahl von unterschiedlich starken Graufiltern (14) nachgeschaltet. Ein Maß für die mit einem Graufilter (14) erreichte Lichtabschwächung ist die Graufilterdichte $D_G$.

Das Blendenrad (12) wird von einer Blendenrad-Ansteuerung (15) und das Filterrad (13) von einer Filterrad-Ansteuerung (16) derart positioniert, daß jeweils eine entsprechend der gewünschten Lichtabschwächung ausgewählte Abtastblende (11) des Blendenrades (12) und gegebenenfalls zusätzlich ein Graufilter (14) des Filterrades (13) im Strahlengang des Abtastlichtes positioniert sind. Blendenrad-Ansteuerung (15) und Filterrad-Ansteuerung (16) werden von Steuersignalen $S_B$ und $S_G$ auf Leitungen (18, 19) angesteuert.

Das Abtastlicht gelangt beispielsweise über eine Kollimationsoptik (17) auf eine Licht/Span-nungs-Wandlereinrichtung (20, 21, 22), die im Ausführungsbeispiel aus einem Photomultiplier (20), einem nachgeschalteten Strom/Spannungs-Wandler (21) und einem Hochspannungsgenerator (22) besteht. Der Verstärkungsgrad des Photomultipliers (20) wird über die Hochspannung $U_H$ eingestellt, die in dem Hochspannungsgenerator (22) erzeugt wird. Der Hochspannungsgenerator (22) wird von Steuersignalwerten $S_H$ auf einer Leitung (23) gesteuert, die somit über die Hochspannung $U_H$ den Verstärkungsgrad des Photomultipliers (20) bestimmen.

Der Strom/Spannungs-Wandler (21) erzeugt aus dem Ausgangsstrom des Photomultipliers (20) analoge Spannungswerte $U_B$, die in einem nachgeschalteten A/D-Wandler (24) in digitale Spannungswerte $U^*_B$ umgewandelt werden.

Dem A/D-Wandler (24) folgt ein Umschalter (25) mit den Schaltstellungen "Abgleich" und "Abtastung".

Während des Abgleichs des Schwarz/Weiß-Scanners ist das Abtastorgan (3) außerhalb der Bildvorlage (2) auf dem Klarglas der Abtasttrommel (1) positioniert. In dieser Position des Abtastorgans (3) gelangt das von der Lichtquelle (5) der Durchsichtsbeleuchtungs-Einrichtung (4) erzeugte, unmodulierte Licht direkt als Abgleichlicht in das Abtastorgan (3). Das Abgleichlicht wird in dem Abtastorgan (3) durch eine ausgewählte Abtastblende (11) des Blendenrades (12) und gegebenenfalls zusätzlich durch ein ausgewähltes Graufilter (14) des Filterrades (13) abgeschwächt. Die durch das abgeschwächte Abgleichlicht bei unterschiedlichen Verstärkungsgraden der Licht/Spannungs-Wandlereinrichtung (20, 21, 22) erzeugten digitalen Spannungswerte $U^*_B$ werden über den Umschalter (25) in der Schaltstellung "Abgleich" und über eine Leitung (26) einer Rechenstufe (27) in einer Abgleicheinrichtung (28) zugeführt.

Die Rechenstufe (27) steht mit einem Hochspannungsdichten-Tabellenspeicher (29), mit einem Blendendichten-Tabellenspeicher (30) und mit einem Graufilterdichten-Tabellenspeicher (31) in Wirkverbindung. Die Abgleicheinrichtung (28) weist außerdem einen digitalen Vergleicher (32) zum Vergleich von Spannungsistwerten mit einem Spannungs-Sollwert, einen Steuersignalgenerator (33) mit einem nachgeschalteten D/A-Wandler (34) zur Erzeugung der Steuersignalwerte $S_H$ für den Hochspannungsgenerator (22) sowie ein zentrales Steuerwerk (35) auf. Das zentrale Steuerwerk (35) steht über eine Leitung (36) mit der Rechenstufe (27) und über eine Leitung (37) mit dem Steuersignalgenerator (33) in Wirkverbindung. Das zentrale Steuerwerk (35) erzeugt auch die Steuersignale $S_B$ und $S_G$ für die Blendenrad-Ansteuerung (15) und die Filterrad-Ansteuerung (16) auf den Leitungen (18, 19).

Während der Vorlagenabtastung befindet sich der Umschalter (25) in der Schaltstellung "Abtastung", in der die durch punkt- und zeilenweise Abtastung der Bildvorlage (2) gewonnenen digitalen Spannungswerte $U^*_B$ als digitale Bildwerte zur Weiterverarbeitung in einem Bildspeicher (38) einer Bildbearbeitungs-Stufe (39) gespeichert werden. Die. Bildbearbeitungs-Stufe (39) weist außerdem eine mit dem Bildspeicher (38) kommunizierende Vorlagenanalyse-Einheit (40) auf. In der Vorlagenalyse-Einheit (40) wird aus den in dem Bildspeicher (38) gespeicherten Bildwerten $U^*_B$ der Bildvorlage (2) die Dichte $D_W$ des Weißpunktes, der hellsten Stelle in der Bildvorlage (2), ermittelt. Die Weißpunkt-Dichte $D_W$, auch Eichwert genannt, wird über eine Leitung (41) der Rechenstufe (27) in der Abgleicheinrichtung (28) zugeführt.

Bei einen Farbscanner befindet sich in dem Abtastorgan zusätzlich ein Farbteiler, welcher das von der abgetasteten farbigen Bildvorlage (2) kommende farbige Abtastlicht in drei Farbabteile "Rot" (R), "Grün" (G) und "Blau" (B) zerlegt und drei separaten Farbkanälen zuführt. Die drei Farbkanäle weisen jeweils eine Licht/Spannungs-Wandlereinrichtung (20, 21, 22), einen A/D-Wandler (24) und einen Umschalter (25) auf. In den drei Farbkanälen werden als digitale Spannungswerte $U^*_B$ die drei Farbwerte R, G und B erzeugt, die wahlweise der gemeinsamen Bildbearbeitungs-Stufe (39) oder jeweils einer jedem Farbkanal zugeordneten Abgleicheinrichtung (28) zugeführt werden.

Das erfindungsgemäße Verfahren zum Abgleich eines optoelektronischen Abtastgerätes wird nachfolgend wiederum am Beispiel eines Schwarz/Weiß-Scanners anhand der Verfahrensschritte [A] bis [G] näher erläutert. Bei einem Farbscanner wird das Verfahren sinngemäß auf jeden der drei Farbkanäle angewendet.

In einem Verfahrensschritt **[A]** wird für die Licht/Spannungs-Wandlereinrichtung (20, 21, 22) eine charakteristische Wandler-Kennlinie $D_H = f(S_H)$ ermittelt, indem zunächst der Zusammenhang zwischen einer Vielzahl von Steuersignalwerten $S_H$ für die Hochspannungseinstellung und den am Ausgang der Licht/Spannungs-Wandlereinrichtung (20, 21, 22) gemessenen Spannungswerten $U^*_B$ festgestellt und dann aus den gemessenen Spannungswerten $U^*_B$ die sogenannte Hochspannungsdichten $D_H$ berechnet werden. Die Hochspannungsdichten $D_H$ sind gewissermaßen ein Maß für eine über die Verstärkung der Licht/Spannungs-Wandlereinrichtung (20, 21, 22) simuliertes Lichtabschwachung.

Zur Durchführung des Verfahrensschrittes [A] wird zunächst das Abtastorgan (3) außerhalb der Bildvorlage (2) auf dem Klarglas der Abtasttrommel (1) positioniert, so daß das Licht der Lichtquelle (5) als Abgleichlicht in das Abtastorgan (3) gelangt. Außerdem wird eine geeignete Abtastblende (11) des Blendenrades (12) ausgewählt und in den Strahlengang des Abgleichlichtes durch Drehen des Blendenrades (12) mittels der Blenden-Ansteuerung (15) eingeschwenkt. Die Abtastblende (11) wird derart ausgewählt, daß das von der Lichtquelle (5) kommende und durch die Abtastblende (11) abgeschwächte Abgleichlicht keine Übersteuerung der Licht/Spannungs-Wandlereinrichtung (20, 21, 22) bzw. des nachgeschalteten A/D-Wandlers (24) verursacht. Andererseits darf die Lichtabschwächung nur so stark sein, daß die gemessenen Spannungswerte

$U^*_B$ am Ausgang der Licht/Spannungs-Wandlereinrichtung (20, 21, 22) noch ein genaues Meßergebnis zulassen.

Danach ruft der Steuersignalgenerator (33) nacheinander gestuft abfallende Steuersignalwerten $S_H$ auf, die in dem Hochspannungsgenerator (22) in eine entsprechende Anzahl von abfallenden Hochspannungswerte $U_H$ umgesetzt werden. Beispielsweise werden die Steuersignalwerte $S_H$ von 4000 bis 0 aufgerufen, die dann in die Hochspannungswerte $U_H$ von 800 V bis 300 V des Hochspannungsbereiches umgewandelt werden. Die für die einzelnen Hochspannungswerte $U_H$ gemessenen Spannungswerte $U^*_B$ werden über die Leitung (26) der Rechenstufe (27) zugeführt, in der dann die zugehörigen Hochspannungsdichten DH für die charakteristische Wandler-Kennlinie $D_H = f(S_H)$ berechnet werden.

Bei der Berechnung der Hochspannungsdichten $D_H$ wird zunächst die dem maximalen Steuersignalwert $S_{Hmax}$ zugeordnete Hochspannungsdichte $D_H$ auf Null gesetzt und dann die Hochspannungsdichten $D_H$ für die sinkenden Steuersignalwerte $S_H$ jeweils als logarithmierter Quotient aus einem aktuell gemessenen Spannungswert $U^*_{B(n+1)}$ und aus dem zuvor gemessenen Spannungswert $U^+_{B(n)}$ berechnet gemäß Gleichung [1].

$$D_{H(n)} = \log U^*_{B(n+1)} / U^*_{B(n)} \qquad [1]$$

Falls die gemessenen Spannungswerte $U^*_B$ bei der Ermittlung der Hochspan- . nungsdichten $D_H$ dennoch zu klein werden sollten, kann die zuvor gewählte Abtastblende (11) des Blendenrades (12) während der laufenden Berechnungen vergrößert werden In diesem Fall wird die erste mit der vergrößerten Abtastblende (11) berechnete Hochspannungsdichte $D_H$ wiederum auf Null gesetzt und dann wie beschrieben verfahren. Der durch das erneute Rüchsetzen entstandene Offset muß bei der Ermittlung der endgültigen Wandler-Kennlinie $D_H = f(S_H)$ kompensiert werden.

Die in der Rechenstufe (27) berechneten Hochspannungsdichten $D_H$ werden in dem Hochspannungsdichten-Tabellenspeicher (29) der Abgleicheinrichtung (28) durch die zugehörigen Steuersignalwerte $S_H$ adressierbar als Wertetabelle $D_H = f(SH)$ zur Weiterverwendung abgelegt.

Ein Beispiel für eine solche Wertetabelle $D_H = f(S_H)$ für einen Schwarz/Weiß-Scanner oder für einen Farbkanal eines Farbscanners ist nachfolgend wiedergegeben.

| Steuersignalwerte SH | Hochspannungsdichte $D_H$ |
|---|---|
| 4000 | 0,00 |
| 3800 | 0,11 |
| 3600 | 0,21 |

(fortgesetzt)

| Steuersignalwerte SH | Hochspannungsdichte $D_H$ |
|---|---|
| 3400 | 0,32 |
| 3200 | 0,42 |
| 3000 | 0,53 |
| 2800 | 0,63 |
| 2600 | 0,74 |
| 2400 | 0,84 |
| 2200 | 0,95 |
| 2000 | 1,05 |
| 1800 | 1,16 |
| 1600 | 1,26 |
| 1400 | 1,37 |
| 1200 | 1,47 |
| 1000 | 1,58 |
| 800 | 1,68 |
| 600 | 1,79 |
| 400 | 1,89 |
| 200 | 2,00 |
| 0 | 2,10 |

In einem Verfahrensschritt **[B]** wird in Form einer Blendendichten-Tabelle für jede Abtastblende (11) des Blendenrades (12) die Blendendichte $D_B$ als Maß für die mit der betreffenden Abtastblende (11) erreichte Lichtabschwächung ermittelt.

Zur Durchführung des Verfahrensschrittes [B] wird das Abtastorgan (3) erneut auf dem Klarglas der Abtasttrommel (1) positioniert, so daß das Licht der Lichtquelle (5) wiederum als Abgleichlicht in das Abtastorgan (3) gelangt. Außerdem wird über einen in dein Steuersignalgenerator (33) erzeugten Steuersignalwert $S_H$ ein Hochspannungswert $U_H$ eingestellt, welcher eine für die Aufnahme der Blendendichte-Tabelle geeignete Verstärkung der Licht/Spannungs-Wandlereinrichtung (20, 21, 22) bewirkt.

Anschließend werden nacheinander die einzelnen, durch Blenden-Nummern gekennzeichneten Abtastblenden (11) des Blendenrades (12) durch Drehen des Blendenrades (12) mit Hilfe der Blendenrad-Ansteuerung (15) in den Strahlengang des Abgleichlichts eingeschwenkt. Das Graufilter (14) des Filterrades (13) wird derart ausgewählt, daß keine Übersteuerung der Licht/Spannungs-Wandlereinrichtung (20, 21, 22) auftritt. Das auf diese Weise abgeschwächte Abgleichlicht wird in der Licht/Spannungs-Wandlereinrichtung (20, 21, 22) in Spannungswerte $U^*_B$ umgesetzt, die über die Leitung (26) der Rechenstufe (27) zugeführt werden.

In der Rechenstufe (27) wird die Blendendichten-Tabelle ermittelt. Dazu wird die Blendendichte $D_B$ der Abtastblende (11) mit der größten Blendenöffnung auf Null gesetzt und die anderen Blendendichten $D_B$ jeweils als logarithmierter Quotient aus dem aktuell gemessenen Spanungswert $U^*_{B(n+1)}$ und aus dem zuvor gemessenen Spannungswert $U^*_{B(n)}$ gemäß Gleichung [2] berechnet und den berechneten Blendendichten $D_B$ die Blenden-Nummern der entsprechenden Abtastblenden (11) zugeordnet werden.

$$D_{B(n)} = \log U^*_{B(n+1)} / U^*_{B(n)} \qquad [2]$$

Die in der Rechenstufe (27) berechneten Blendendichten $D_B$ der Abtastblenden (11) werden in dem Blendendichten-Tabellenspeicher (30) der Abgleicheinrichtung (28) durch die zugehörigen Blenden-Nummern der Abtastblenden (11) adressierbar als Blendendichten-Tabelle $D_B$ = f (Blenden-Nr.) zur Weiterverwendung abgelegt.

Ein Beispiel für eine Blendendichten-Tabelle für einen Schwarz/Weiß-Scanner oder für einen Farbkanal eines Farbscanners ist nachfolgend wiedergegeben.

| Blenden-Nr. | Blendendichte $D_B$ |
|---|---|
| 1 | 3,2041 |
| 2 | 3,0706 |
| 3 | 2,9371 |
| 4 | 2,8036 |
| 5 | 2,6701 |
| 6 | 2,5366 |
| 7 | 2,4031 |
| 8 | 2,2696 |
| 9 | 2,1361 |
| 10 | 2,0026 |
| 11 | 1,8691 |
| 13 | 1,6021 |
| 14 | 1,4686 |
| 15 | 1,3350 |
| 16 | 1,2015 |
| 17 | 1,0680 |
| 18 | 0,9345 |
| 19 | 0,8010 |
| 20 | 0,6675 |
| 21 | 0,5340 |
| 22 | 0,4005 |

(fortgesetzt)

| Blenden-Nr. | Blendendichte $D_B$ |
|---|---|
| 23 | 0,2670 |
| 24 | 0,1335 |
| 25 | 0,0000 |

In einem Verfahrensschritt **[C]** wird in Form einer Graufilterdichten-Tabelle für jedes Graufilter (14) des Filterrades (13) die Graufilterdichte $D_G$ als Maß für die mit dem betreffenden Graufilter (14) erzielte Lichtabschwächung ermittelt.

Der Verfahrensschritt [C] läuft im Prinzip wie unter dem Verfahrensschritt [B] beschrieben ab. Die einzelnen, durch Filter-Nummern gekennzeichneten Graufilter (14) des Filterrades (13) werden durch Drehen des Filterrades (13) mit Hilfe der Graufilter-Ansteuerung (16) in den Strahlengang des Abgleichlichts eingeschwenkt. Die Abtastblende (11) wird derart ausgewählt, daß keine Übersteuerung der Licht/Spannungs-Wandlereinrichtung (20, 21 22) erfolgt. Das auf diese Weise abgeschwächte Abgleichlicht wird in der Licht/Spannungs-Wandlereinrichtung (20, 21, 22) in Spannungswerte $U^*_B$ umgesetzt, die über die Leitung (26) der Rechenstufe (27) ebenfalls zugeführt werden.

In der Rechenstufe (27) wird die Graufilterdichten-Tabelle ermittelt. Dazu wird die Graufilterdichte $D_G$ des Graufilters (14) mit dem geringsten Lichtabschwächungsfaktor auf Null gesetzt und die anderen Graufilterdichten $D_G$ werden ebenso jeweils als logarithmierter Quotient aus dem aktuell gemessenen Spanungswert $U^*_{B(n+1)}$ und aus dem zuvor gemessenen Spannungswert $U^*_{B(n)}$ gemäß Gleichung [3] berechnet und den berechneten Graufilterdichten $D_G$ die Filter-Nummern der entsprechenden Graufilter (14) zugeordnet werden.

$$D_{G(n)} = \log U^*_{B(n+1)}/U^*_{B(n)} \qquad (3)$$

Die in der Rechenstufe (27) berechneten Graufilterdichten $D_{GF}$ werden in dem Graufilterdichten-Tabellenspeicher (31) der Abgleicheinrichtung (28) durch die zugehörigen Filter-Kennnummmern der Graufilter (14) adressierbar als Graufilterdichten-Tabelle DG = f (Filter-Nr.) zur Weiterverwendung abgelegt.

Ein Beispiel für eine Graufilterdichten-Tabelle für einen Schwarz/Weiß-Scanner oder für einen Farbkanal eines Farbscanners ist nachfolgend wiedergegeben.

| Filter-Nr. | Graufilterdichte DG |
|---|---|
| 1 | 0,0000 |
| 2 | 0,3000 |
| 3 | 0,6000 |

(fortgesetzt)

| Filter-Nr. | Graufilterdichte DG |
|---|---|
| 4 | 0,9000 |
| 5 | 1,2000 |
| 6 | 1,5000 |
| 7 | 1,8000 |
| 8 | 2,1000 |

Nach der Berechnung der drei Dichten-Tabellen wird in einem Verfahrensschritt **[D]** eine als Referenzblende zu verwendende Abtastblende (11) des Blendenrades (12) und die zugehörige Referenz-Blendendichte $D_{RB}$ der Referenzblende aus der Blendendichten-Tabelle für den gerätespezifischen Abgleich der Licht/Spannungs-Wandlereinrichtung (20, 21, 22) ermittelt.

Zur Durchführung des Verfahrensschrittes [D] wird über einen in dem Steuersignalgenerator (33) erzeugten Steuersignalwert $S_H$ ein minimaler Hochspannungswert $U_H$ eingestellt, welcher eine für Ermittlung der Referenzblende geeignete Verstärkung der Licht/ Spannungs-Wandlereinrichtung (20, 21, 22) bewirkt. Außerdem wird dafür gesorgt, daß kein Graufilter (14) des Filterrades (13) in dem Strahlengang des Abgleichlichts positioniert ist. Dann werden nacheinander die einzelnen Abtastblenden (11) des Blendenrades (12) mittels der Blendenrad-Ansteuerung (18) eingeschwenkt und die entsprechenden Spannungswerte $U^*_B$ gemessen und bewertet.

Bei einem Schwarz/Weiß-Scanner wird als Referenzblende diejenige Abtastblende (11) mit der größeren Blendenöffnung ausgewählt, die gerade noch einen unterhalb eines Spannungs-Grenzwertes $U_G$ liegenden Spannungswert $U^*_B$ liefert. Als Spannungs-Grenzwert $U_G$ wird in zweckmäßiger Weise der vorgebene Weißpegel $U_W$ gewählt. Die zu der ausgewählten Referenzblende gehorende Referenz-Blendendichte $D_{RB}$ wird der in dem Blendendichten-Tabellenspeicher (30) abgelegten Blendendichten-Tabelle entnommen und dort entsprechend markiert. Wird beispielsweise die Abtastblende (11) mit der Blenden-Nummer "8" als Referenzblende ausgewählt, hat diese die Referenz-Blendendichte $D_{RB}$ = 2,2696.

Bei einem Farbscanner wird diejenige Abtastblende (11) als Referenzblende ausgewählt, die in allen drei Farbkanälen einen unterhalb des Spannungs-Grenzwertes $U_G$ liegenden Spannungswert $U^*_B$ liefert.

In einem Verfahrensschritt **[E]** wird dann mit der im Verfahrensschritt [D] ermittelten Referenzblende (11) und ohne Zwischenschaltung eines Graufilters (14) der gerätespezifische Abgleich der Licht/Spannungs-Wandlereinrichtung (20, 21, 22) auf einen vorgegebenen Spannungspegel, vorzugsweise auf den vorgebenen Weißpegel $U_W$, bei Positionierung des Abtastorgans (3) auf dem Klarglas der Abtasttrommel (1) durchgeführt.

Beim gerätespezifischen Abgleich gelangt das durch die eingestellte Referenz-blende (11) abgeschwächte Abgleichlicht auf die Licht/Spannungs-Wandlereinrichtung (20, 21, 22), welche das abgeschwächte Abgleichlicht in einen Spannungswert $U^*_B$ als aktuellen Spannungs-Istwert $U_{IST}$ für eine Regelung umsetzt. Der jeweilige Spannungs-Istwert $U_{IST}$ gelangt über den Umschalter (25) in der Schaltstellung "Abgleich" und über die Leitung (26) auf einen ersten Eingang des digitalen Vergleichers (32). !n dem digitalen Vergleicher (32) wird der jeweils aktuelle Spannungs-Istwert $U_{IST}$ mit dem an einem zweiten Eingang des digitalen Vergleichers (21) anliegenden vorgegeben Weißpegel $U_W$ als Spannungs-Sollwert $U_{SOLL}$ verglichen.

Der Steuersignaigenerator (33) erzeugt in Abhängigkeit von dem in dem digitalen Vergleicher (32) erzielten aktuellen Vergleichsergebnis, das über eine Leitung (42) an den Steuersignalgenerator (33) geliefert wird, ansteigende oder abfallende Steuersignalwerte $S_H$. Die ansteigenden oder abfallenden Steuersignalwerte $S_H$ erhöhen oder erniedrigen über die Hochspannungwerte $U_H$ die Verstärkung des Photomultipliers (20) und damit den Spannungs-Istwert $U_{IST}$ solange, bis dieser dem Spannungs-Sollwert $U_{SOLL}$ entspricht und der Steuersignalgenerator (33) abgeschaltet wird.

Die für die Übereinstimmung von Spannungs-Istwert $U_{IST}$ und vorgegebenem Weißpegel $U_W$ erforderliche Verstärkung des Photomultipliers (20) wird durch Speicherung des entsprechenden Referenz-Steuersignalwertes $S_{RH}$ in dem Steuersignalgenerator (33) konstant gehalten. Durch den gerätespezifischen Abgleich wird erreicht, daß bei Abtastung auf dem Klarglas der Abtasttrommel (1) mit der Referenzblende (11) immer der vorgegebene Weißpegel $U_W$ am Ausgang der Licht/Spannungs-Wandlereinrichtung (20, 21, 22) erreicht wird.

Am Ende des gerätespezifischen Abgleichs wird außerdem aus der abgelegten Hochspannungsdichten-Tabelle die für den gespeicherten Referenz-Steuersignalwert $S_{RH}$ zuvor berechnete Referenz-Hochspannungsdichte $D_{RH}$ ermittelt und zusammen mit dem zugehörigen Referenz-Steuersignalwert $S_{RH}$ in der Rechenstufe (27) zur Weiterverwendung gespeichert. Wenn beispielsweise der festgestellte Referenz-Steuersignalwert $S_{RH} = 400$ beträgt wird der Hochspannungsdichte-Tabelle hierfür die Referenz-Hochspannungsdichte $D_{RH} = 1,89$ entnommen.

Der gerätespezifische Abgleich nach den Verfahrensschritten [A] bis [E] müssen nur in großen Zeitabständen oder bei Austausch von Bauelementen, beispielsweise bei Austausch einer Lichtquelle oder des Photomultipliers, wiederholt werden.

Die nachfolgende Einstellung der Verstärkung der Licht/Spannungs-Wandlereinrichtung (20, 21, 22) nach den Verfahrensschritte [F] und [G] ist dagegen vorlagenabhängig und muß daher bei jeder abzutastenden neuen Bildvorlage (2) ausgeführt werden.

In dem Verfahrensschritt **[F]** werden die erforderliche Abtastblende (11) für die Abtastung der Bildvorlage (2) und der erforderliche Steuersignalwert $S_H$ für den Hochspannungsgenerator (22) für einen zweiten, vorlagenabhängigen Abgleich der Licht/Spannungs-Wandlereinrichtung (20, 21, 22) ermittelt.

Die Auswahl der erforderlichen Abtastblende (11) des Blendenrades (12) erfolgt entsprechend der gewünschten Abtastauflösung bei einer Feinabtastung oder einer Grobabtastung der Bildvorlage (2). Gleichzeitig wird der gespeicherten Blendendichten-Tabelle die Blendendichte $D_B$ der ausgewählten Abtastblende (11) entnommen.

Zur Ermittlung des erforderlichen Steuersignalwertes $S_H$ des Hochspannungsgenerators (22) der Licht/Spannungs-Wandlereinrichtung (20, 21, 22) wird unter anderem die Dichte $D_W$ des Weißpunktes der jeweils abzutastenden Bildvorlage (2) benötigt. Die Weißpunkt Dichte $D_W$ kann vorab mit einem separaten Arbeitsvorbereitungsgerät oder mit dem Abtastgerät ermittelt werden.

Die Weißpunkt-Dichte $D_W$ läßt sich durch manuelle densimetrische Ausmessung des Weißpunktes der Bildvorlage (2) mit dem Abtastorgan (3) oder durch eine automatische Analyse des Bildumfanges der Bildvorlage (2) anhand der durch punkt- und zeilenweise Abtastung der Bildvorlage (2) gewonnenen Bildwerte $U^*_B$ festgestellt werden.

Zur automatischen Analyse des Bildumfanges tastet das Abtastorgan (3) zunächst die Bildvorlage (2) punkt- und zeilenweise ab. Die dabei gewonnenen Bildwerte werden über den Umschalter (25) in der Schaltstellung "Abtastung" in dem Bildspeicher (38) der Bildbearbeitungs-Einrichtung (39) gespeichert. In der Vorlagenanalyse-Einheit (40) wird anhand der in dem Bildspeicher (38) abgelegten Bildwerte $U^*_B$ die Weißpunkt-Dichte $D_W$ der Bildvorlage (2) ermittelt und über die Leitung (41) an die Rechenstufe (27) in der Abgleicheinrichtung (28) übergeben.

Die Vorlagenanalyse kann beispielsweise nach der DE-A-43 09 879 erfolgen. Die Bildwerte $U^*_B$ für die Vorlagenanalyse können durch eine Feinabtastung (Feinscan) oder durch eine Grobabtastung (Prescan oder Grobscan) der Bildvorlage (2) gewonnen werden. Bei der Feinabtastung wird die Bildvorlage (2) mit der für die Reproduktion erforderlichen Abtastauflösung, bei der Grobabtastung mit einer entsprechend gröberen Abtastauflösung und einer gegenüber der normalen Abtastblende vergrößerten Abtastblende abgetastet.

Nach der Ermittlung der Weißpunkt-Dichte Dw der Bildvorlage (2) erfolgt die Berechnung des einzustellenden Steuersignalwertes $S_H$ wie folgt.

Es wird zunächst die Blendendichten-Differenz $\Delta D_B$ zwischen der im Verfahrensschritt [D] ermittelten Referenz-Blendendichte $D_{RB}$ der Referenz-Blende und der Blendendichte $D_B$ der für die Grobabtastung oder Feinantastung ausgewählten Abtastblende gemäß Gleichung [4] festgestellt.

$$\Delta D_B = (D_{RB} - D_B) \qquad [4]$$

Aus der ermittelten Blendendichten-Differenz $\Delta D_B$, der Weißpunkt-Dichte $D_W$, der beim ersten Abgleich im Verfahrensschritt [E] ermittelten Referenz-Hochspan-nungsdichte $D_{RH}$ und einer Offset-Dichte $D_O$, welche eventuelle Schwankungen der Lichtintensität der Lichtquelle (5) berücksichtigt, eine Gesamtdichte $D_{GS}$ gemäß Gleichung [5] berechnet.

$$D_{GS} = \Delta D_B + D_{RH} - D_W - D_O \qquad [5]$$

In Gleichung [5] bedeuten:

$D_{GS}$ = Gesamtdichte
$\Delta D_E$ = Blendendichte-Differenz
$D_{RH}$ = Referenz-Hochspannungsdichte
$D_W$ = Weißpunkt-Dichte
$D_O$ = Offset-Dichte

Die Offset-Dichte $D_O$, welche ein Maß für die Abweichung der Lichtintensität der Lichtquelle (5) von einem Sollwert ist, wird beispielsweise über eine Kontrollmessung auf Klarglas ermittelt und muß nur in größeren Zeitabständen, beispielsweise bei Austausch der Lichtquelle oder der Abtasttrommel, aktualisiert werden.
Soll die vorlagenabhangige Verstärkungseinstellung für eine Feinabtastung der Bildvorlage (2) durchgeführt werden, wird in die Gleichung [5] die bei der Vorlagenanalyse ermittelte Weißpunkt-Dichte $D_W$ eingesetzt. Soll die vorlagenabhängige Verstärkungseinstellung für eine Grobabtastung zum Zwecke einer Vorlagenanalyse durchgeführt werden, wird in die Gleichung [5] die Weißpunkt-Dichte $D_W = 0$ eingesetzt, da die Weißpunkt-Dichte $D_W$ der Bildvorlage (2) noch unbekannt ist.
Nach der Berechnung der Gesamtdichte $D_{GS}$ als Abgleichdichte für die vorlagenbezogene Verstärkungseinstellung wird in der abgelegten Hochspannungsdichten-Tabelle $D_H = f(S_H)$ der Steuersignalwert $S_H$ markiert, welcher derjenigen Hochspannungsdichte $D_H$ zugeordnet ist, die wertemäßig der errechneten Gesamtdichte $D_{GS}$ entspricht. Der markierte Steuersignalwert $S_H$ wird dann zur Einstellung der Verstärkung der Licht/Spannungs-Wandlereinrichtung (20, 21, 22) verwendet.
Falls die berechnete Gesamtdichte $D_{GS}$ außerhalb des Wertebereiches der Hochspannungsdichten $D_H$ der Hochspannungsdichten-Tabelle liegen sollte, wird ein Graufilter (14) des Filterrades (13) eingeschwenkt, um die Gesamtdichte $D_{GS}$ derart zu reduzieren, daß sie innerhalb des Wertebereiches der Hochspannungsdichten DH liegt. Die erforderliche minimale Graufilterdichte $D_{Gmin}$ errechnet sich nach Gleichung [6] aus der Blendendichte-Differenz $\Delta D_B$, der Weißpunktdichte $D_W$ der Bildvorlage (2) und der maximalen Hochspannungsdichte $D_{Hmax}$ in der Hochspannungsdichten-Tabelle.

$$D_{Gmin} = D_{GS} - D_{Hmax} \qquad [6]$$

Die der berechneten Graufilterdichte $D_{Gmin}$ am nächsten kommende Graufilterdichte $D_G$ eines Graufilters (14) wird der Graufilterdichten-Tabelle entnommen und die zugehörige Filter-Nummer des zu verwendenden Graufilters (14) festgestellt.
Die reduzierte Gesamtdichte $G^*_{DS}$ ergibt sich dann nach Gleichung [7].

$$D^*_{GS} = D_{GS} - D_G \qquad [7]$$

In Gleichung [7] bedeuten:

$D^*_{GS}$ = reduzierte Gesamtdichte
$D_{GS}$ = berechnete Gesamtdichte
$D_G$ = Graufilterdichte des verwendeten Graufilters

Falls die gewünschten Werte nicht unmittelbar den Werte-Tabellen entnehmbar sind, lassen sie sich durch eine einfache lineare Interpolationsrechnung aus den in den Wertetabellen vorhandenen Werten ermitteln.
Nach der Ermittlung der Einstellparameter erfolgt in dem abschließenden Verfahrensschritt **[G]** der vorlagenbezogene Einstellung der Verstärkung der Licht/Span-nungs-Wandlereinrichtung (20, 21, 22), wozu je nachdem, ob eine Feinabtastung oder eine Grobabtastung der Bildvorlage (2) erfolgen soll, die erforderliche Abtastblende (11) und gegebenfalls der erforderliche Graufilter (14) in den Strahlengang des Abtastlichts gebracht und die entsprechend berechneten Einstellparamter eingestellt werden müssen.
Die Erfindung soll abschließend an zwei Beispielen verdeutlicht werden.

Beispiel 1:

Wenn die Abtastblende mit der Blenden-Nr. "5" ausgewählt wird, ergibt sich aus der Blendendichten-Tabelle die zugehörige Blendendichte $D_B = 2,6701$.
Wurde die Abtastblende mit der Blenden-Nr. "8" als Referenz-Blende ermittelt, ergibt sich aus der Blendendichten-Tabelle die Referenz-Blendendichte $D_{RB} = 2,2696$.
Aus Gleichung [4] erhält man die Blendendichtedifferenz $\Delta D_B = (D_{RB} - D_B) = 2,2696 - 2,6701 = -$

0,4005.

Wird ferner angenommen, daß beim gerätespezifischen Abgleich ein Referenz-Steuersignalwert $S_{RH}$ = 400 festgestellt und dafür in der Hochspannungs-dichte-Tabelle die Referenz-Hochspannungsdichte $D_{RH}$ = 1,89 entnommen wurde und daß eine Weißpunkt Dichte $D_W$ = 0,2000 und eine Offset-Dichte $D_O$ = 0,0700 ermittelt wurde, ergibt sich nach Gleichung [5] die Gesamtdichte zu $D_{GS}$ = $\Delta D_B$ + $D_{RH}$ - $D_W$ - $D_O$ = - 0,4005 + 1,8900 - 0,2000 - 0,0700 = 1,2195.
Die berechnete Gesamtdichte $D_{GS}$ liegt innerhalb der Wertetabelle, und es wird kein zusätzliche Lichtabschwächung benötigt, so daß das Graufilter (14) mit der Filter-Nr. "1" und der Graufilterdichte $D_G$ = 0,0000 ausgewählt wird.

Für die berechnte Gesamtdichte $D_{GS}$ wird dann aus der Hochspannungsdichten-Tabelle der erforderliche Steuersignalwert $S_H$ = 1681 durch Interpolation ermittelt.

Beispiel 2:

Wenn die Abtastblende mit der Blenden-Nr. "15" ausgewählt wird, ergibt sich aus der Blendendichten-Tabelle die zugehörige Blendendichte $D_B$ = 1,3350.
Wurde wiederum die Abtastblende mit der Blenden-Nr. "8" als Referenz-Blende ermittelt, ergibt sich aus der Blendendichten-Tabelle die Referenz-Blendendichte
$D_{RB}$ = 2,2696.
Aus Gleichung [4] erhält man die Blendendichtedifferenz $\Delta D_B$ = ($D_{RB}$ - $D_B$) = 2,2696 - 1,3350 = 0,9346. Wird wiederum angenommen, daß beim gerätespezifischen Abgleich ein Referenz-Steuersignalwert $S_{RH}$ = 400 festgestellt und dafür in der Hochspannungsdichten-Tabelle die Referenz-Hochspannungsdichte $D_{RH}$ = 1,89 entnommen wurde und daß eine Weißpunkt Dichte $D_W$ = 0,2000 und eine Offset-Dichte $D_O$ = 0,0700 ermittelt wurde, ergibt sich nach Gleichung [5] die Gesamtdichte zu
$D_{GS}$ = $\Delta D_B$ + $D_{RH}$ - $D_W$ - $D_O$ = 0,9346 + 1,8900 - 0,0200 - 0,0700 = 2,5546.
Die berechnete Gesamtdichte $D_{GS}$ = 2,5546 liegt diesmal außerhalb des Wertebereiches der Hochspannungsdichten-Tabelle, so daß zur Dichtereduzierung ein Graufilter verwendet werden muß. In diesern Fall wird nach Gleichung [6] mit $D_{Hmax}$ = 2,1000 eine minimale Graufilterdichte $D_{Gmin}$ = DGS - $D_{Hmax}$ = 2,5546 - 2,1000 = 0,4546 berechnet. Aus der Graufilterdichten-Tabelle wird dann das Graufilter mit der Filter-Nr. "3" und der Graufilterdichte DG = 0,6000 ausgewählt
Die reduzierte Gesamtdichte ergibt sich dann nach Gleichung [7] zu $D^*_{GS}$ = $D_{GS}$ - $D_G$ = 2,5546 - 0,6000 = 1,9546, und der zugehörige Steuersignalwert ist ca. $S_H$ =283

**Patentansprüche**

1. Verfahren zum Abgleich eines optoelektronischen Abtastorgans eines Abtastgerätes zur punkt- und zeilenweisen Abtastung von Bildvorlagen, bei dem

  - eine Bildvorlage beleuchtet und das mit den Dichten der abgetasteten Bildvorlage modulierte Abtastlicht mittels einer Licht/Spannungs-Wandlereinrichtung in Bildwerte umgesetzt wird,
  - ein Weißpegel vorgegeben wird und
  - der Abgleich des Abtastorgans durch Änderung der Verstärkung der Licht/Spannungs-Wandlereinrichtung derart vorgenommen wird, daß der bei Abtastung der hellsten Stelle der Bildvorlage, dem Weißpunkt, erzeugte Bildwert dem vorgegebenen Weißpegel entspricht, **dadurch gekennzeichnet, daß**
  - die Licht/Spannungs-Wandlereinrichtung (20, 21, 22) mit einem Abgleichlicht beaufschlagt wird,
  - aus den Bildwerten ($U^*_B$), die bei unterschiedlichen Verstärkungsgraden der Licht/Spannungs-Wandlereinrichtung (20, 21, 22) gemessen werden, Wandlerdichten ($D_H$) als Maß für die jeweils durch die unterschiedlichen Verstarkungsgrade simulierte Abschwächung des Abgleichlichts ermittelt und die ermittelten Wandlerdichten ($D_H$) den entsprechenden Verstärkungsgraden als Wandlerdichten-Tabelle zugeordnet werden,
  - aus den Bildwerten ($U^*_B$), die bei unterschiedlichen Abtastblenden (11) im Abgleichlicht gemessen werden, Blendendichten ($D_B$) als Maß für die mit der jeweiligen Abtastblende (11) erreichte Abschwächung des Abgleichlichts ermittelt und die ermittelten Blendendichten ($D_B$) den entsprechenden Abtastblenden (11) als Blendendichten-Tabelle zugeordnet werden,
  - eine Referenzblende und die zugehörige Referenz-Blendendichte ($D_{RB}$) aus der Blendendichte-Tabelle ermittelt wird,
  - mit der ermittelten Referenzblende ein Abgleich durchgeführt wird, indem der Verstärkungsgrad der Licht/Spannungs-Wandlereinrichtung (20, 21, 22) derart eingestellt wird, daß der Bildwert ($U^*_B$), der mit dem durch die Referenzbiende abgeschwächten Abgleichlicht gewonnen wird, dem vorgegebenen Weißpegel ($U_W$) entspricht und indem die zu dem eingestellten Verstarkungsgrad gehörende Referenz-Wandlerdichte (DRH) aus der Wandlerdichten-Tabelle festgestellt wird,
  - die Abtastblende (11) für die Abtastung der Bildvorlage (2) und die zugehörige Blendendichte ($D_B$) aus der Blendendichte-Tabelle ermittelt wird,

- aus der Referenz-Blendendichte ($D_{RB}$), der Referenz-Wandlerdichte ($D_{RH}$), der Blendendichte ($D_B$) der Abtastblende (11) und der Dichte ($D_W$) des Weißpunktes der Bildvorlage (2) eine Gesamtdichte ($D_{GS}$) berechnet wird,
- der Verstärkungsgrad der Licht/Spannungs-Wandlereinrichtung (20, 21, 22) festgestellt wird, der in der Wandlerdichten-Tabelle derjenigen Wandlerdichte ($D_H$) zugeordnet ist, die der berechneten Gesamtdichte ($D_{GS}$) entspricht und
- der festgestellte Verstärkungsgrad an der Licht/Spannungs-Wandlereinrichtung (20, 21, 22) für die Abtastung der Bildvorlage (2) eingestellt wird.

2. Verfahren nach Anspruch 1, **dadurch gekennzeichnet, daß** zur Berechnung der Gesamtdichte ($D_{GS}$)

- die Blendendichte-Differenz ($\Delta D_B$) zwischen der ermittelten Referenz-Blendendichte ($D_{RB}$) und der Blendendichte ($D_B$) der Abtastblende (11) nach der Gleichung $\Delta D_B = (DR_B - D_B)$ berechnet wird und
- die Gesamtdichte ($D_{GS}$) aus der Blendendichte-Differenz ($\Delta D_B$), der Referenz-Blendendichte ($D_{RB}$) und der Dichte ($D_W$) des Weißpunktes der Bildvorlage (2) nach der Gleichung $D_{GS} = \Delta D_B + D_{RH} - D_W$ berechnet wird.

3. Verfahren nach Anspruch 1 oder 2, **dadurch gekennzeichnet daß**

- aus den Bildwerten ($U^*_B$), die bei unterschiedlichen Graufiltern (14) im Abgleichlicht gemesen werden Graufilterdichten (DG) als Maß für die mit dem jeweiligen Graufiltern (14) erreichte Abschwächung des Abgleichlichts ermittelt und die ermittelten Graufilterdichten ($D_G$) den entsprechenden Graufiltern (14) als Graufilterdichten-Tabelle zugeordnet werden,
- die berechnete Gesamtdichte ($D_{GS}$), falls diese außerhalb des Wertebereiches der Wandlerdichten-Tabelle liegt, um eine Graufilterdichte ($D_{Gmin}$) derart reduziert wird, daß die reduzierte Gesamtdichte ($D^*_{GS}$) innerhalb des Wertebereiches der Wandlerdichten-Tabelle liegt,
- die erforderliche Graufilterdichte ($D_{Gmin}$) durch Differenzbildung zwischen der Gesamtdichte (DGS) und dem maximalen Dichtewert ($D_{Hmax}$) der Wandlerdichten-Tabelle gemäß der Gleichung $D_{Gmin} = D_{GS} - D_{hmax}$ berechnet wird und
- das der berechneten Graufilterdichte ($D_{Gmin}$) in der Graufilterdichten-Tabelle zugeordnete Graufilter (14) festgestellt und zur Abschwächung des Abgleichlichts verwendet wird.

4. Verfahren nach einem der Ansprüche 1 bis 3, **dadurch gekennzeichnet, daß** die Werte, die den Dichten-Tabellen nicht unmittelbar zu entnehmen sind, durch Interpolation ermittelt werden.

5. Verfahren nach einem der Ansprüche 1 bis 4, **dadurch gekennzeichnet, daß** zur Ermittlung der Wandlerdichten-Tabelle

- die dem maximalen Verstärkungsgrad zugeordnete Wandlerdichte ($D_H$) gleich Null gesetzt wird,
- vom maximalen Verstärkungsgrad gestuft abfallende Verstärkungsgrade vorgegeben werden und
- die Wandlerdichten ($D_H$) für die abfallenden Verstärkungsgrade jeweils als logarithmierter Quotient aus einem aktuell gemessenen Bildwert [$U^*_{B(n+1)}$] und dem zuvor gemessenen Bildwert [$U^*_{Bn}$] berechnet werden.

6. Verfahren nach Anspruch 5, **dadurch gekennzeichnet, daß** bei der Ermittlung der Wandlerdichten-Tabelle das auf die Licht/Spannungs-Wandler-Einrichtung (20, 21, 22) fallende Abgleichlicht mittels einer Abtastblende (11) derart abgeschwächt wird, daß keine Übersteuerung auftritt.

7. Verfahren nach einem der Ansprüche 1 bis 6, **dadurch gekennzeichnet, daß** zur Ermittlung der Blendendichten-Tabelle

- jeweils Abtastblenden (11) mit unterschiedlichen Blendenöffnungen in das Abgleichlicht gebracht werden,
- die Blendendichte ($D_B$) für die Abtastblende (11) mit der größten Blendenöffnung Null gesetzt wird und
- die Blendendichten ($D_B$) für die verschiedenen Abtastblenden (11) jeweils als logarithmierter Quotient aus einem aktuell gemessenen Bildwert [$U^*_{B(n+1)}$] und dem zuvor gemessenen Bildwert [$U^*_{Bn}$] berechnet werden.

8. Verfahren nach Anspruch 7, **dadurch gekennzeichnet, daß** bei der Ermittlung der Blendendichten-Tabelle die Verstärkung derart eingestellt wird, daß keine Übersteuerung auftritt.

9. Verfahren nach einem der Ansprüche 1 bis 8, **dadurch gekennzeichnet, daß** zur Ermittlung der Referenzblende

- eine geeigneter Verstärkungsgrad der Licht/Spannungs-Wandlerein-richtung (20, 21, 22) eingestellt wird,
- die bei den verschiedenen Abtastblenden (11) erreichten Bildwerte ($U^*_B$) mit einem Grenzwert

($U_G$) verglichen werden und

- aufgrund des Vergleichs eine der Abtastblenden (11) als Referenzblende ausgewählt wird.

**10.** Verfahren nach Anspruch 9, **dadurch gekennzeichnet, daß** bei einem Schwarz/Weiß-Scanner diejenige Abtastblende (11) mit der größeren Blendenöffnung als Referenzblende ausgewählt wird, bei der ein unterhalb des Grenzwertes ($U_G$) liegender Bildwert ($U^*_B$) erreicht wird.

**11.** Verfahren nach Anspruch 9, **dadurch gekennzeichnet, daß** bei einem FarbScanner diejenige Abtastblende (11) als Referenzblende ausgewählt wird, bei der in allen drei Farbkanälen ein unterhalb des Grenzwertes ($U_G$) liegender Bildwert ($U^*_B$) erzeugt wird.

**12.** Verfahren nach einem der Ansprüche 9 bis 11, **dadurch gekennzeichnet, daß** der Weißpegel ($U_W$) als Grenzwert ($U_G$) gewählt wird.

**13.** Verfahren nach einem der Ansprüche 1 bis 12, **dadurch gekennzeichnet, daß** die Abtastblende (11) für die Abtastung der Bildvorlage (2) entsprechend der gewünschten Abtastauflösung ausgewählt wird.

**14.** Verfahren nach einem der Ansprüche 1 bis 13, **dadurch gekennzeichnet, daß** die optische Dichte ($D_W$) des Weißpunktes der Bildvorlage (2) durch densimetrische Ausmessung der hellsten Stelle der Bildvorlage (2) ermittelt wird.

**15.** Verfahren nach einem der Ansprüche 1 bis 14, **dadurch gekennzeichnet, daß**

- die Bildvorlage (2) punkt- und zeilenweise optoelektronisch abgetastet wird und die dabei gewonnenen Bildwerte digitalisiert und gespeichert werden und
- die optische Dichte ($D_W$) des Weißpunktes der Bildvorlage (2) durch eine Vorlagenanalyse anhand der gespeicherten digitalen Bildwerte ermittelt wird.

**16.** Verfahren nach Anspruch 15, **dadurch gekennzeichnet, daß** die Bildwerte für die Vorlagenanalyse durch Abtastung der Bildvorlage (2) mit einer gegenüber der normalen Abtastfeinheit gröberen Abtastfeinheit gewonnen werden.

**17.** Verfahren nach einem der Ansprüche 1 bis 16, **dadurch gekennzeichnet, daß** zur Ermittlung der Graufilterdichten-Tabelle

- jeweils Graufilter (14) mit unterschiedlichen Lichtabschwächungsfaktoren in das Abgleichlicht gebracht werden,

- die Graufilterdichte ($D_G$) für das Graufilter (14) mit dem größten Lichtabschwächungsfaktor Null gesetzt wird und
- die Graufilterdichten ($D_B$) für die unterschiedlichen Graufilter (14) jeweils als logarithmierter Quotient aus einem aktuell gemessenen Bildwert [$U^*_{B(n+1)}$] und dem zuvor gemessenen Bildwert [$U^*_{Bn}$] berechnet werden.

**18.** Verfahren nach Anspruch 17, **dadurch gekennzeichnet, daß** bei der Ermittlung der Graufilterdichten-Tabelle das Abgleichlicht mittels einer Abtastblende (11) derart abgeschwächt wird, daß keine Übersteuerung auftritt.

**19.** Verfahren nach einem der Ansprüche 1 bis 18, **dadurch gekennzeichnet, daß**

- die Abtastblenden (11) durch Blenden-Nummern **gekennzeichnet** sind und
- die ermittelten Blendendichten ($D_B$) der Blendendichten-Tabelle durch die Blenden-Nummern der entsprechenden Abtastblenden (11) adressierbar gespeichert werden.

**20.** Verfahren nach einem der Ansprüche 1 bis 19, **dadurch gekennzeichnet, daß**

- die Graufilter (14) durch Filter-Nummern **gekennzeichnet** sind und
- die ermittelten Graufilterdichten ($D_G$) der Graufilterdichten-Tabelle durch die Graufilter-Nummern der entsprechenden Graufilter (14) adressierbar gespeichert werden

**21.** Verfahren nach einem der Ansprüche 1 bis 20, **dadurch gekennzeichnet, daß**

- die Licht/Spannungs-Wandlereinrichtung (20, 21, 22) aus einem Photomultiplier (2), einem nachgeschalteten Strom/Spannungs-Wandler (21) und einem durch einen Steuersignalwert ($S_H$) gesteuerten Hochspannungsgenerator (22) besteht, dessen Hochspannungswerte die Verstärkungsgrade der Licht/Spannungs-Wandlereinrichtung (20, 21, 22) bestimmen,
- die gestuften Verstärkungsgrade durch gestufte Steuersignalwerte ($S_H$) eingestellt werden und
- die ermittelten Wandlerdichten ($D_H$) als Wandlerdichten-Tabelle [$D_H = f(S_H)$] durch die zugehörigen Steuersignalwerte ($S_H$) abrufbar gespeichert werden.

**22.** Verfahren nach einem der Ansprüche 1 bis 21, **dadurch gekennzeichnet. daß**

- die Licht/Spannungs-Wandlereinrichtung (20, 21, 22) aus einem Photomultiplier (2), einem nachgeschalteten Strom/Spannungs-Wandler (21) und einem durch einen Steuersignalwerte $(S_H)$ gesteuerten Hochspannungsgenerator (22) besteht, dessen Hochspannungswerte die Verstärkungsgrade der Licht/Spannungs-Wandlereinrichtung (20, 21. 22) bestimmen,
- für den Abgleich gestufte Steuersignalwerte $(S_H)$ als Sollwerte erzeugt werden,
- die Bildwerte $(U^*_B)$ als Istwerte mit den Steuersignalwerten $(S_H)$ verglichen werden und
- die bei Gleichheit erreichten Steuersignalwerte $(S_H)$ gespeichert werden.

23. Verfahren nach einem der Ansprüche 1 bis 22, **dadurch gekennzeichnet, daß** das Abgleichlicht durch die zur Vorlagenabtastung verwendete Lichtquelle (5) des Abtastgerätes erzeugt wird.

24. Verfahren nach einem der Ansprüche 1 bis 23, **dadurch gekennzeichnet, daß** das Verfahren auf jeden Farbkanal eines Farb-Scanners angewendet wird.

**Claims**

1. Method of calibrating an opto-electronic scanning member of a scanner for scanning pictorial originals dot by dot and line by line, in which

   - a pictorial original is illuminated and the scanning light modulated by the densities of the scanned pictorial original is converted into image values by means of a light/voltage conversion means,
   - a white level is preset, and
   - the calibration of the scanning member is performed by varying the gain of the light/voltage conversion means in such a way that the image value which is produced when the lightest point in the pictorial original is scanned corresponds to the preset white level, **characterised in that**
   - the light/voltage conversion means (20, 21, 22) has a calibrating light applied to it,
   - converter densities $(D_H)$ are determined from the image values $(U^*_B)$ which are measured at different levels of gain of the light/voltage conversion means (20, 21, 22), as an indication of the attenuation of the calibrating light which is simulated by each of the different levels of gain, and the converter densities $(D_H)$ which are determined are assigned to the corresponding levels of gain to form a converter density table,
   - diaphragm densities $(D_B)$ are determined from the image values $(U^*_B)$ which are measured with different scanning diaphragms (11) in the calibrating light, as an indication of the attenuation of the calibrating light obtained with the given diaphragm (11) and the diaphragm densities $(D_B)$ which are determined are assigned to the corresponding scanning diaphragms (11) to form a diaphragm density table,
   - a reference diaphragm and the associated reference diaphragm density $(D_{RB})$ are determined from the diaphragm density table,
   - a calibration is performed with the reference diaphragm determined, by setting the level of gain of the light/voltage conversion means (20, 21, 22) in such a way that the image value $(U^*_B)$ which is obtained with the calibrating light attenuated by the reference diaphragm corresponds to the preset white level (Uw), and by finding from the converter density table the reference converter density $(D_{RH})$ which belongs to the level of gain set,
   - the scanning diaphragm (11) for scanning the pictorial original and the associated diaphragm density $(D_B)$ is determined from the table of diaphragm densities,
   - a total density $(D_{GS})$ is calculated from the reference diaphragm density $(D_{RB})$, the reference converter density $(D_{RH})$, the diaphragm density $(D_B)$ for the scanning diaphragm (11) and the density (Dw) of the white point in the pictorial original (2),
   - that level of gain of the light/voltage conversion means (20, 21, 22) is found which, in the converter density table, is assigned to the converter density (DH) which corresponds to the total density calculated $(D_{GS})$ and
   - the level of gain found is set at the light/voltage conversion means (20, 21, 22) for the scanning of the pictorial original (2).

2. Method according to claim 1, **characterised in that** to allow the total density $(D_{GS})$ to be calculated

   - the difference in diaphragm density $(\Delta D_B)$ between the reference diaphragm density determined $(D_{RB})$ and the diaphragm density $(D_B)$ of the scanning diaphragm is calculated from the equation $\Delta D_B = (D_{RB} - D_B)$ and
   - the total density $(D_{GS})$ is calculated from the difference in diaphragm density $(\Delta D_B)$, the reference diaphragm density $(D_{RB})$ and the density (Dw) of the white point in the pictorial original (2) from the equation $D_{GS} = \Delta D_B + D_{RH} - D_W$.

3. Method according to claim 1 or 2, **characterised in that**

   - grey-filter densities $(D_G)$ are determined from the image values $(U^*_B)$ which are measured in the calibrating light with different grey filters (14), as an indication of the attenuation of the calibrating light obtained with the given grey filters (14), and the grey filter densities ($D_G$) which are determined are assigned to the corresponding grey filters (14) to form a grey filter density table,

- if it lies outside the range of values in the converter density table, the total density calculated ($D_{GS}$) is reduced by a grey filter density ($D_{Gmin}$) in such a way that the reduced total density ($D^*_{GS}$) is within the range of ranges in the converter density table,

- the grey filter density required ($D_{Gmin}$) is calculated by forming the difference between the total density ($D_{GS}$) and the maximum density value ($D_{Hmax}$) in the converter density table from the equation $D_{Gmin} = D_{GS} - D_{Hmax}$, and

- the grey filter (14) which is assigned to the grey filter density calculated ($D_{Gmin}$) in the grey filter density table is found and is used to attenuate the calibrating light.

4. Method according to any of claims 1 to 3, **characterised in that** the values which cannot be obtained straight from the density tables are determined by interpolation.

5. Method according to any of claims 1 to 4, **characterised in that,** to establish the table of converter densities

   - the converter density ($D_H$) assigned to the maximum level of gain is made equal to zero,

   - levels of gain descending in graduations from the maximum level of gain are preset, and

   - the converter densities ($D_H$) for the descending levels of gain are each calculated as a quotient in logarithmic form from an image value which is measured at the time [$U^*_{B(n+1)}$] and the image value measured previously [$U^*_{Bn}$].

6. Method according to claim 5, **characterised in that** in establishing the converter density table the calibrating light incident on the light/voltage conversion means (20, 21, 22) is attenuated by means of a scanning diaphragm (11) in such a way that saturation does not occur.

7. Method according to any of claims 1 to 6, **characterised in that,** to establish the diaphragm density table

   - scanning diaphragms (11) having different apertures are inserted in the calibrating light,

   - the diaphragm density ($D_B$) for the scanning diaphragm (11) having the largest aperture is set at zero, and

   - the diaphragm densities ($D_B$) for the different scanning diaphragms (11) are each calculated as a quotient in logarithmic form from an image value which is measured at the time [$U^*_{B(n+1)}$] and the image value measured previously [$U^*_{Bn}$].

8. Method according to claim 7, **characterised in that** in establishing the diaphragm density table the gain is set in such a way that saturation does not occur.

9. Method according to any of claims 1 to 8, **characterised in that,** to determine the reference diaphragm

   - a suitable level of gain is set for the light/voltage conversion means (20, 21, 22),

   - the image values ($U^*_B$) obtained with the different scanning diaphragms (11) are compared with a limiting value ($U_G$) and

   - one of the scanning diaphragms (11) is selected as a reference diaphragm on the basis of the comparison.

10. Method according to claim 9, **characterised in that** with a black and white scanner that scanning diaphragm (11) which has a fairly large aperture and with which an image value ($U^*_B$) lying below the limiting value ($U_G$) is obtained is selected as the reference diaphragm.

11. Method according to claim 9, **characterised in that** with a colour scanner that scanning diaphragm (11) with which an image value ($U^*_B$) lying below the limiting value ($U_G$) is obtained on all three colour channels is selected as the reference diaphragm.

12. Method according to any of claims 9 to 11, **characterised in that** the white level ($U_W$) is selected as the limiting value ($U_G$).

13. Method according to any of claims 1 to 12, **characterised in that** the scanning diaphragm (11) for scanning the pictorial original (2) is selected to suit the desired scanning resolution.

14. Method according to any of claims 1 to 13, **characterised in that** the optical density ($D_W$) of the white point in the pictorial original (2) is determined by densimetric measurement of the lightest point in the pictorial original (2).

15. Method according to any of claims 1 to 14, **characterised in that**

   - the pictorial original (2) is scanned opto-electronically dot by dot and line by line and the image values obtained in this way are digitised and stored, and

- the optical density ($D_W$) of the white point in the pictorial original (2) is determined by analysing the original by reference to the stored digital image values.

16. Method according to claim 15, **characterised in that** the image values for the analysis of the original are obtained by scanning the pictorial original (2) at a fineness of scan coarser than the normal fineness of scan.

17. Method according to any of claims 1 to 16, **characterised in that,** to establish the grey filter density table

   - grey filters (14) having different light attenuation factors are inserted in the calibrating light,
   - the grey filter density ($D_G$) for the grey filter (14) having the highest light attenuation factor is set at zero, and
   - the grey filter densities ($D_B$) for the different grey filters (14) are each calculated as a quotient in logarithmic form from an image value which is measured at the time [$U^*_{B(n+1)}$] and the image value measured previously [$U^*_{Bn}$].

18. Method according to claim 17, **characterised in that,** in establishing the grey filter density table the calibrating light is attenuated by a scanning diaphragm (11) in such a way that saturation does not occur.

19. Method according to any of claims 1 to 18, **characterised in that**

   - the scanning diaphragms (11) are identified by diaphragm numbers and
   - the diaphragm densities ($D_B$) in the diaphragm density table which are determined are stored in such a way as to be addressable by the numbers of the corresponding scanning diaphragms (11).

20. Method according to any of claims 1 to 19, **characterised in that**

   - the grey filters (14) are identified by filter numbers and
   - the grey filter densities ($D_G$) in the grey filter density table which are determined are stored in such a way as to be addressable by the numbers of the corresponding grey filters (14).

21. Method according to any of claims 1 to 20, **characterised in that**

   - the light/voltage conversion means (20, 21, 22) comprises a photomultiplier (2), current/voltage converter (21) connected downstream and a high voltage generator (22) controlled by a control signal value ($S_H$), the high voltage values from the high voltage generator (22) determining the levels of gain of the light/voltage conversion means (20, 21, 22),

   - the graduated levels of gain are set by means of graduated control signal values ($S_H$), and
   - the converter densities ($D_H$) determined are stored as a converter density table [$D_H = f(S_H)$] in such a way as to be able to be called up by the associated control signal values ($S_H$).

22. Method according to any of claims 1 to 21, **characterised in that**

   - the light/voltage conversion means (20, 21, 22) comprises a photomultiplier (2), current/voltage converter (21) connected downstream and a high voltage generator (22) controlled by a control signal value ($S_H$), the high voltage values from the high voltage generator (22) determining the levels of gain of the light/voltage conversion means (20, 21, 22),
   - graduated control signal values ($S_H$) are generated as desired values for the calibration,
   - the image value ($U^*_B$) form actual values and are compared with the control signal values ($S_H$), and
   - the control signal values ($S_H$) obtained when the two are equal are stored.

23. Method according to any of claims 1 to 22, **characterised in that** the calibrating light is generated by the scanner light source (5) which is used for scanning the original.

24. Method according to any of claims 1 to 23, **characterised in that** the method is applied to each colour channel of a colour scanner.

**Revendications**

1. Procédé pour étalonner un organe de détection optoélectronique d'un scanner pour la détection point par point et ligne par ligne de modèles d'images, selon lequel

   - on éclaire un modèle d'image et on convertit la lumière de détection modulée par le modèle d'image détecté à l'aide d'un convertisseur lumière/tension pour former des valeurs d'image,
   - on prédétermine un niveau de blanc et
   - on étalonne l'organe de détection en modifiant l'amplification du convertisseur lumière/tension de façon telle qu'en détectant le point le plus clair du modèle d'image, c'est-à-dire le point blanc, la valeur d'image obtenue corresponde au niveau de blanc prédéterminé,

**caractérisé en ce qu'**

- on applique de la lumière d'étalonnage au convertisseur lumière/tension (20, 21, 22),
- à partir des valeurs d'images ($U^*_B$) mesurées pour différents degrés d'amplification du convertisseur lumière/tension (20, 21, 22) on mesure les densités de conversion ($D_H$) comme mesures de l'atténuation simulée de la lumière d'étalonnage, par les différents degrés d'amplification et
- on attribue aux densités de conversion ($D_H$), obtenues, les degrés d'amplification correspondants comme tableau des densités du convertisseur,
- à partir des valeurs d'images ($U^*_B$) mesurées avec la lumière d'étalonnage pour différents diaphragmes de détection (11), on prend les densités de diaphragme ($D_B$) comme mesures pour l'atténuation de la lumière d'étalonnage obtenue avec chaque diaphragme de détection (11) et on associe les densités de diaphragme ($D_B$) obtenues aux différents diaphragmes de détection (11) sous la forme d'un tableau de densités de diaphragme,
- on détermine un diaphragme de référence et la densité de diaphragme de référence associée ($D_{RB}$) à partir du tableau des densités de diaphragmes,
- avec le diaphragme de référence, obtenu, on effectue un étalonnage en réglant le degré d'amplification du convertisseur lumière/tension (20, 21, 22) pour que la valeur d'image ($U^*_B$) obtenue avec la lumière d'équilibrage atténuée par le diaphragme de référence, corresponde au niveau de blanc prédéterminé ($U_W$) et on détermine la densité de conversion de référence ($D_{RH}$) correspondant à ce degré d'amplification réglé à partir du tableau des densités de convertisseur,
- on détermine le diaphragme de détection (11) pour la détection du modèle d'image (2) et la densité de diaphragme ($D_B$) correspondante à partir du tableau des densités de diaphragme,
- à partir de la densité de diaphragme de référence ($D_{RB}$), de la densité de convertisseur de référence ($D_{RH}$) de la densité de diaphragme ($D_B$) du diaphragme de détection (11) et de la densité ($D_W$) du point blanc du modèle d'image (2) on calcule une densité globale ($D_{GS}$),
- on détermine le degré d'amplification du convertisseur lumière/tension (20, 21, 22) associé dans le tableau des densités de convertisseur, à cette densité de convertisseur ($D_H$) respective qui correspond à la densité globale calculée

($D_{GS}$) et
- on règle le degré d'amplification constaté dans le convertisseur lumière/tension (20, 21, 22) pour la détection du modèle d'image (2).

2. Procédé selon la revendication 1,
**caractérisé en ce que**
pour le calcul de la densité globale ($D_{GS}$)

- on calcule la différence des densités de diaphragme ($\Delta D_B$) entre la densité de diaphragme de référence, obtenue, ($D_{RB}$) et la densité de diaphragme ($D_B$) du diaphragme de détection (11) selon l'équation $\Delta D_B = (D_{RB} - D_B)$ et
- on calcule la densité globale ($D_{GS}$) à partir de la différence de densité de diaphragme ($\Delta D_B$), de la densité de diaphragme de référence ($D_{RB}$) et de la densité ($D_W$) du point blanc du modèle d'image (2) selon l'équation $D_{GS} = \Delta D_B + D_{RH} - D_W$.

3. Procédé selon les revendications 1 ou 2,
**caractérisé en ce qu'**

- à partir des valeurs d'images ($U^*_B$) mesurées avec différents filtres de gris (14) et la lumière d'étalonnage, on détermine les densités de filtres de gris ($D_G$) comme mesures de l'atténuation de la lumière d'étalonnage obtenues avec chaque filtre de gris (14) respectif et on associe les densités de filtres de gris ($D_G$) aux différents filtres de gris (14) sous la forme d'un tableau des densités de filtres de gris,
- on réduit la densité globale calculée ($D_{GS}$) si celle-ci se situe en dehors de la plage des valeurs du tableau des densités de convertisseur par une densité de filtre de gris ($D_{Gmin}$) pour que la densité globale ($D^*_{GS}$), réduite, se situe dans la plage des valeurs du tableau des densités de convertisseur,
- on calcule la densité de filtre de gris ($D_{Gmin}$) nécessaire en formant la différence entre la densité globale ($D_{GS}$) et la valeur de densité maximale ($D_{Hmax}$) du tableau des densités de convertisseur selon l'équation $D_{Gmin} = D_{GS} - D_{hmax}$ et
- on détermine le filtre de gris (14) associé à la densité de filtre de gris calculée ($D_{Gmin}$) dans le tableau des densités de filtres de gris et on utilise celui-ci pour atténuer la lumière d'étalonnage.

4. Procédé selon l'une quelconque des revendications 1 à 3,
**caractérisé en ce qu'**
on détermine par interpolation les valeurs qui ne se trouvent pas directement dans le tableau des densités.

**5.** Procédé selon l'une quelconque des revendications 1 à 4, **caractérisé en ce que** pour déterminer le tableau des densités de convertisseur

- on fixe à zéro la densité de convertisseur ($D_H$) associée au degré d'amplification maximum,
- on prédétermine des degrés d'amplification décroissant de manière échelonnée à partir du degré d'amplification maximum,
- on calcule les densités de convertisseur ($D_H$) pour les degrés d'amplification décroissant, chaque fois comme quotient logarithmique de la valeur d'image actuelle mesurée [$U^*_{B(n+1)}$] et de la valeur d'image [$U^*_{Bn}$] calculée précédemment.

**6.** Procédé selon la revendication 5, **caractérisé en ce que** pour déterminer le tableau des densités de convertisseur on atténue la lumière d'étalonnage tombant sur le convertisseur lumière/tension (20, 21, 22) à l'aide d'un diaphragme de détection (11) de façon à ne pas avoir d'excursion de commande.

**7.** Procédé selon l'une quelconque des revendications 1 à 6, **caractérisé en ce que** pour déterminer le tableau des densités de diaphragme

- on met dans la lumière d'étalonnage chaque fois des diaphragmes de détection (11) avec des ouvertures de diaphragme différentes,
- on fixe à zéro la densité de diaphragme ($D_B$) du diaphragme de détection (11) ayant la plus grande ouverture et
- on calcule les densités de diaphragme ($D_B$) pour les différents diaphragmes de détection (11) chaque fois comme quotient logarithmique de la valeur d'image actuelle mesurée [$U^*_{B(n+1)}$] et la valeur d'image [$U^*_{Bn}$] mesurée précédemment.

**8.** Procédé selon la revendication 7, **caractérisé en ce que** pour déterminer le tableau des densités de diaphragme on règle l'amplification pour ne pas avoir d'excursion de commande.

**9.** Procédé selon l'une quelconque des revendications 1 à 8, **caractérisé en ce que** pour déterminer le diaphragme de référence

- on règle un degré d'amplification approprié du convertisseur lumière/tension (20, 21, 22),
- on compare les valeurs d'images ($U^*_B$) obtenues pour les différents diaphragmes de détection (11) à une valeur limite ($U_G$) et
- à partir de cette comparaison on sélectionne l'un des diaphragmes de détection (11) comme diaphragme de référence.

**10.** Procédé selon la revendication 9, **caractérisé en ce que** dans le cas d'un scanner noir/blanc, on sélectionne comme diaphragme de référence, le diaphragme de détection (11) ayant la plus grande ouverture pour laquelle on obtient une valeur d'image ($U^*_B$) située en dessous de la valeur limite ($U_G$).

**11.** Procédé selon la revendication 9, **caractérisé en ce que** dans le cas d'un scanner couleur, on sélectionne comme diaphragme de référence le diaphragme (11) pour lequel dans les trois canaux de couleur on obtient une valeur d'image ($U^*_B$) située en dessous de la valeur ($U_G$).

**12.** Procédé selon l'une quelconque des revendications 9 à 11, **caractérisé en ce qu'** on sélectionne le niveau de blanc ($U_W$) comme valeur limite ($U_G$).

**13.** Procédé selon l'une quelconque des revendications 1 à 12, **caractérisé en ce qu'** on sélectionne le diaphragme de détection (11) pour la détection du modèle d'image (2) selon la résolution souhaitée pour la détection.

**14.** Procédé selon l'une quelconque des revendications 1 à 13, **caractérisé en ce qu'** on détermine la densité optique ($D_W$) du point blanc du modèle d'image (2) par mesure densimétrique du point le plus clair du modèle d'image (2).

**15.** Procédé selon l'une quelconque des revendications 1 à 14, **caractérisé en ce que**

- on détecte de manière optoélectronique le modèle d'image (2) point par point et ligne par ligne et on numérise et on mémorise les valeurs d'images obtenues,
- on détermine la densité optique ($D_W$) du point blanc du modèle d'image (2) par une analyse de modèle à l'aide des valeurs d'images numériques mémorisées.

**16.** Procédé selon la revendication 15,
**caractérisé en ce qu'**
on forme les valeurs d'images pour l'analyse du modèle par détection du modèle d'image (2) avec une finesse de détection moins poussée que la finesse de détection normale.

**17.** Procédé selon l'une quelconque des revendications 1 à 16,
**caractérisé en ce que**
pour déterminer le tableau des densités de filtres de gris

- on place dans la lumière d'étalonnage chaque fois un filtre de gris (14) ayant des coefficients d'atténuation de lumière différents,
- on met à zéro la densité de filtre de gris ($D_G$) du filtre de gris (14) ayant le plus grand coefficient d'atténuation de lumière et
- on calcule les densités de filtre de gris ($D_B$) pour des filtres de gris différents (14) chaque fois comme rapport logarithmique de la valeur d'image actuelle mesurée ($U^*_{B(n+1)}$) et de la valeur d'image [$U^*_{Bn}$] mesurée précédemment.

**18.** Procédé selon la revendication 17,
**caractérisé en ce**
pour déterminer le tableau des densités de filtre de gris on atténue la lumière d'étalonnage à l'aide d'un diaphragme de détection (11) pour ne pas avoir d'excursion de commande.

**19.** Procédé selon l'une quelconque des revendications 1 à 18,
**caractérisé en ce qu'**

- on repère les diaphragmes de détection (11) par des numéros de diaphragme et
- on mémorise de manière adressable les densités de diaphragme ($D_B$) obtenues dans le tableau des densités de diaphragme par les numéros des diaphragmes (11) correspondants.

**20.** Procédé selon l'une quelconque des revendications 1 à 19,
**caractérisé en ce qu'**

- on caractérise les filtres de gris (14) par des numéros de filtre et
- on mémorise de manière adressable les densités de filtres de gris obtenues ($D_G$) du tableau des densités de filtres de gris par des numéros des filtres de gris (14) correspondants.

**21.** Procédé selon l'une quelconque des revendications 1 à 20,
**caractérisé en ce que**

- le convertisseur lumière/tension (20, 21, 22) se compose d'un photomultiplicateur (2) suivi d'un convertisseur intensité/tension (21) et d'un générateur de haute tension (22) commandé par une valeur de signal de commande ($S_H$) dont les valeurs de haute tension définissent les coefficients d'amplification du convertisseur lumière/tension (20, 21, 22),
- on règle les degrés d'amplification échelonnés par des valeurs de signaux de commande échelonnées ($S_H$) et
- on mémorise de manière adressable les densités de convertisseur obtenues ($D_H$) comme tableau de densités de convertisseur [$D_H$ = f ($S_H$)] par des valeurs de signaux de commande correspondants ($S_H$).

**22.** Procédé selon l'une quelconque des revendications 1 à 21,
**caractérisé en ce que**

- le convertisseur lumière/tension (20, 21, 22) se compose d'un photomultiplicateur (2) suivi d'un convertisseur intensité/tension (21) et d'un générateur de haute tension (22) commandé par une valeur de signal de commande ($S_H$), les valeurs de haute tension définissant le coefficient d'amplification du convertisseur lumière/tension (20, 21, 22),
- on génère comme valeurs de consigne, les valeurs du signal de commande ($S_H$), étagées pour l'étalonnage,
- on compare les valeurs d'images ($U^*_B$) comme valeurs réelles aux valeurs du signal de commande ($S_H$) et
- en cas d'égalité on mémorise les valeurs de signal de commande ($S_H$).

**23.** Procédé selon l'une quelconque des revendications 1 à 22,
**caractérisé en ce qu'**
on génère la lumière d'étalonnage par la source lumineuse (5) du scanner, cette source étant utilisée pour la détection du modèle.

**24.** Procédé selon l'une quelconque des revendications 1 à 23,
**caractérisé en ce qu'**
on applique le procédé à chaque canal couleur d'un scanner couleur.